# EUROPEAN PATENT APPLICATION

(11) **EP 4 810 732 A1**
(43) Date of publication of application: **23.09.2026**
(21) Application number: 26164434.8
(22) Date of filing: 12.03.2026
(51) Int. Cl.: E03C 1/04, F16K 11/00

(54) **DISASSEMBLABLE FAUCET**

(30) Priority: 17.03.2025 IT 202500005367
(71) Applicant: FIR ITALIA S.p.A., 20122 Milano (IT)
(72) Inventor: COLOMBO, Nicola, Romentino NO (IT); FORTINA, Angelo, Bellinzago Novarese NO (IT)
(74) Representative: De Ros, Alberto

(57) **Abstract**

A tap (1000) for the controlled dispensing of water is described and claimed, comprising: a hollow column (1100) that is positioned vertically when in use, having a first end and a second end; a cartridge housing (1200) inserted into said hollow column (1100) at said first end, a cartridge (1300) of cylindrical or conical or prismatic or truncated pyramidal shape, adapted to receive at least one inlet flow of water from below and to supply an outlet flow of water from below or laterally, and adapted to perform a flow control action and, if necessary, a flow mixing action, said cartridge (1300) being inserted into said cartridge housing (1200), a spout (1500) located above said column (1100) and positioned horizontally when in use, with a closed conduit (1510) extending from a first end zone to a second end zone, and adapted to receive water from said cartridge (1300) and dispense it to a user, and a control handle (1400) located above said column (1100) and above said spout (1500), and coupled to said cartridge (1300) to control the operation of said cartridge (1300). Said cartridge housing (1200) internally defines a conduit (1210) coupled at its inlet to the outlet of said cartridge (1300) and which opens directly into said conduit (1510) of said spout (1500) at said first end zone from below; the coupling between the conduit (1210) of said cartridge housing (1200) and the outlet of said cartridge (1300) is achieved directly by means of a water passage chamber (1220); said cartridge housing (1200) has an axis; said conduit (1210) of said cartridge housing (1200) is inclined relative to said axis by an angle between 0° and 30°.

## Description

### Technical field of invention

The present invention relates to a modular tap, more specifically one equipped with a spout and a handle that can be easily replaced and thus modified.

### Prior Art

As with any product, manufacturers periodically update the taps they offer to their customers.

It also happens that a customer may request a new product or a modification of a product already in the catalog.

Often, in the case of taps, the difference between an old product and a new or modified product lies in the product's aesthetics (for example, the shape and/or color of one or more of its parts).

Prior to this invention, producing a new tap meant modifying the production line; for example, it might have been necessary to design, order, and obtain new molds. This was costly and time-consuming.

### Summary of the invention

The general objective of the present invention is to provide a solution relating to the structure of a tap that makes it easier and faster to bring a new product to market.

This general objective, as well as other more specific objectives, is achieved by the tap having the features set forth in the appended claims, which form an integral part of this description.

### Description of the Figures

The features and advantages of the present invention will become clearer from the following description, which should be considered illustrative and not limiting, in conjunction with the accompanying drawings, in which:
Fig. 1 shows a perspective view of a first embodiment of a tap according to the present invention,
Fig. 2 shows a perspective view of a first embodiment of a tap according to the present invention,
Fig. 3 shows an exploded view of the tap of Fig. 1,
Fig. 4 shows, from various views, the cartridge housing that forms part of the tap of Fig. 1,
Fig. 5 shows a first detail (with some parts in section) of the tap of Fig. 1 in two different views,
Fig. 6 shows a second detail of the tap of Fig. 1 in a top view,
Fig. 7 shows the second detail of the tap of Fig. 1 in a partially exploded view,
Fig. 8 shows, in a sectional view, a first alternative cartridge housing to the one shown in Fig. 4, constituting a first variant thereof, and
Fig. 9 shows, in a sectional view, a second alternative cartridge housing to the one shown in Fig. 4, constituting a second variant thereof.

### Detailed Description

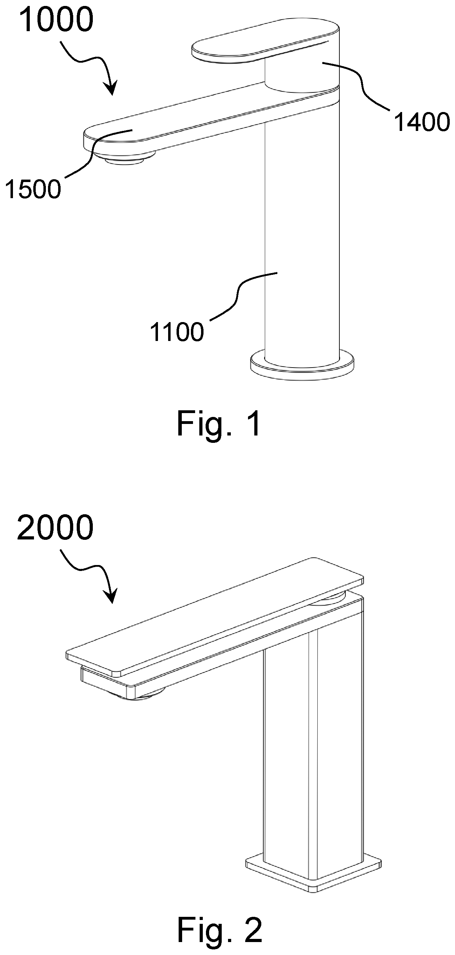

Fig. 1 and Fig. 2 show respectively two perspective views of a first 1000 and a second 2000 embodiment of taps according to the present invention.

These two views do not reveal the innovative aspects of the present invention, which relate to the internal components of the tap.

These will be illustrated below, primarily with reference to the tap 1000 of Fig. 1 (which is a particularly advantageous embodiment of the present invention) and the related figures from Fig. 2 to Fig. 7. However, the present invention may be implemented differently from what is shown in these figures.

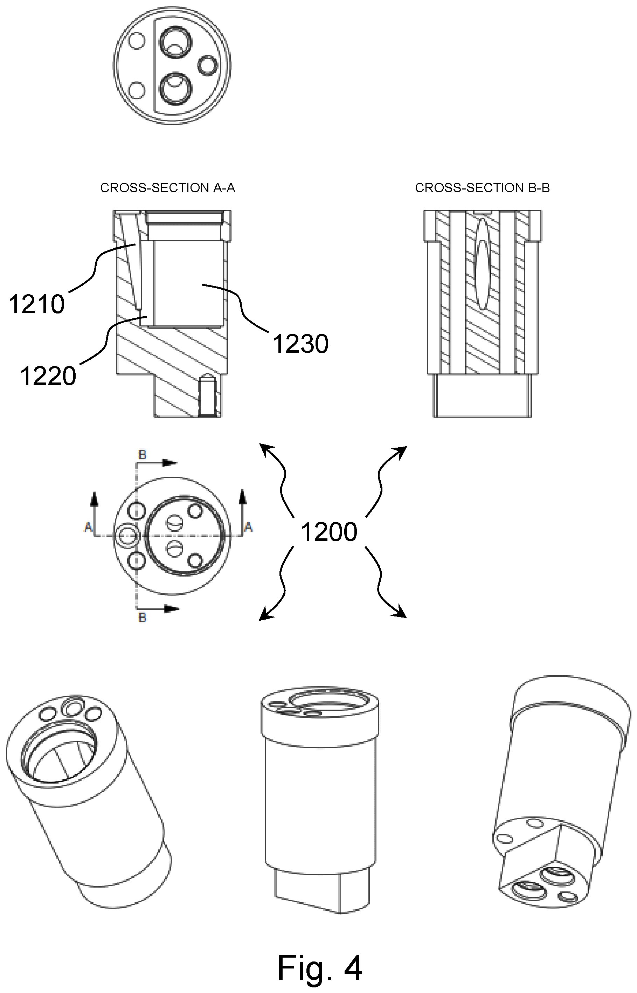

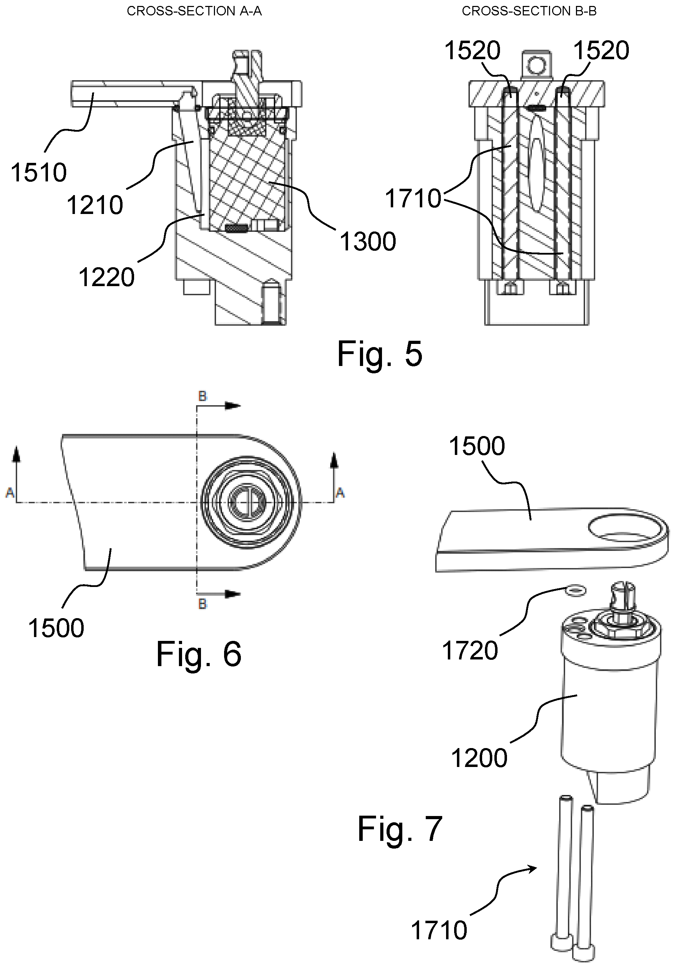

In general, the tap 1000 is used for the controlled dispensing of water and comprises:
- a hollow column 1100 having a first end and a second end,
- a cartridge housing 1200 (shown from various views in Fig. 4) inserted into the hollow column 1100 at the first end,
- a cartridge 1300 of cylindrical or conical or prismatic or truncated pyramidal shape, adapted to receive at least one inlet flow of water from below and to supply an outlet flow of water from below or laterally, and adapted to perform a flow control action and, if necessary, a flow mixing action; the cartridge 1300 is inserted into the cartridge housing 1200 (see Fig. 5),
- a control handle 1400 coupled to the cartridge 1300 to control the operation of the cartridge 1300, and
- a spout 1500 with a closed conduit 1510 (see Fig. 5) extending from a first end zone to a second end zone, and adapted to receive water from the cartridge 1300 and dispense it to a user;
   the cartridge housing 1200 internally defines a conduit 1210 coupled at its inlet to the outlet of the cartridge 1300 and which opens directly into the conduit 1510 of the spout 1510 at the first end zone from below (see Fig. 5);
   the coupling between the conduit 1210 of the cartridge housing 1200 and the outlet of the cartridge 1300 is achieved directly by means of a water passage chamber 1220 (see Fig. 4 and Fig. 5).

Considering the tap 1000, when assembled and installed in a typical configuration, the column 1100 is positioned vertically, its first end is upper and its second end is lower. In this configuration, the cartridge housing 1200 is inserted into the hollow column 1100 at its upper end.

The cartridge 1300 is inserted into a dedicated seat 1230 of the cartridge housing 1200; therefore, the passage chamber 1220 is adjacent to the seat 1230.

When the tap 1000 is assembled and installed in a typical configuration, the spout 1500 is positioned horizontally, and the closed conduit 1510 of the spout 1500 extends from the first end zone near the column 1100 to the second end zone far from the column 1100. In this configuration, the conduit 1210 opens directly into the conduit 1510 near the column 1100 from below.

The spout 1500, which is located above the column 1100, and the control handle 1400, which is located above the column 1100 and the spout 1500.

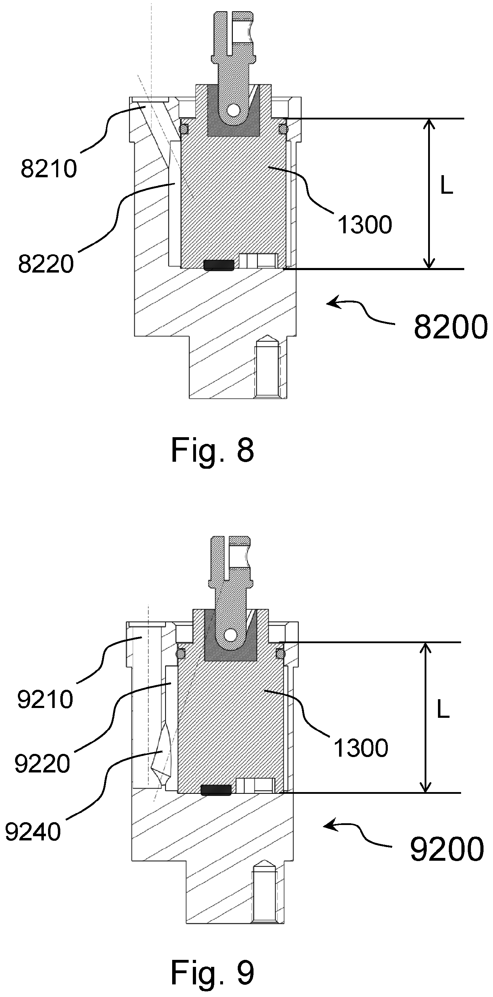

The cartridge housing 1200 has an axis, and the conduit 1210 is inclined relative to said axis, generally, by an angle between 0° and 30°. In some embodiments, said angle is approximately 0° (see, for example, Fig. 9), in other embodiments, said angle is between 1° and 5°, in other embodiments, said angle is between 5° and 15° (see, for example, Fig. 4), and in other embodiments, said angle is between 15° and 30° (see, for example, Fig. 8).

Typically and advantageously, the column is straight, in particular along its entire length.

Typically and advantageously, the spout is straight, in particular along its entire length.

Typically and advantageously, the conduit is straight, in particular along its entire length.

Typically and advantageously, the cartridge housing is a single piece.

According to a first possibility, the piece is made of metal and is produced by machining. In this specific case, the conduit is formed by drilling and the passage chamber is formed by milling; as a result, there is a lateral protrusion of the seat that accommodates the cartridge.

According to a second possibility, the piece is made of polymeric material and is obtained by molding; preferably, a so-called "technopolymer," i.e., a high-performance plastic, may be used.

As shown in Figures 1, 2, and 3-7 (or equivalent embodiments), the conduit 1210 is connected to the conduit 1510 directly by means of the water passage chamber 1220 formed in the cartridge housing 1200, that is, there are no other spaces between the two conduits. In this way, the water path involves only: the water pipes connected to the tap (which are not part of the tap), the cartridge, the cartridge housing, and the spout.

The internal configuration of the cartridge housing depends on the cartridge. According to typical and preferred embodiments of the present invention (in particular, all those shown in the figures), the cartridge (which is a substantially cylindrical element) has a side outlet.

As can be seen from the figures, the cartridge housing has an axis (which specifically coincides with the axis of the column). Advantageously (as shown, for example, in Fig. 4 and similarly in Fig. 8), the conduit 1210 of the cartridge housing 1200 is inclined relative to said axis. Alternatively (as shown, for example, in Fig. 9), it could be parallel to said axis, i.e., inclined at an angle of 0°.

The shape, position, and dimensions of the passage chamber also depend on the cartridge.

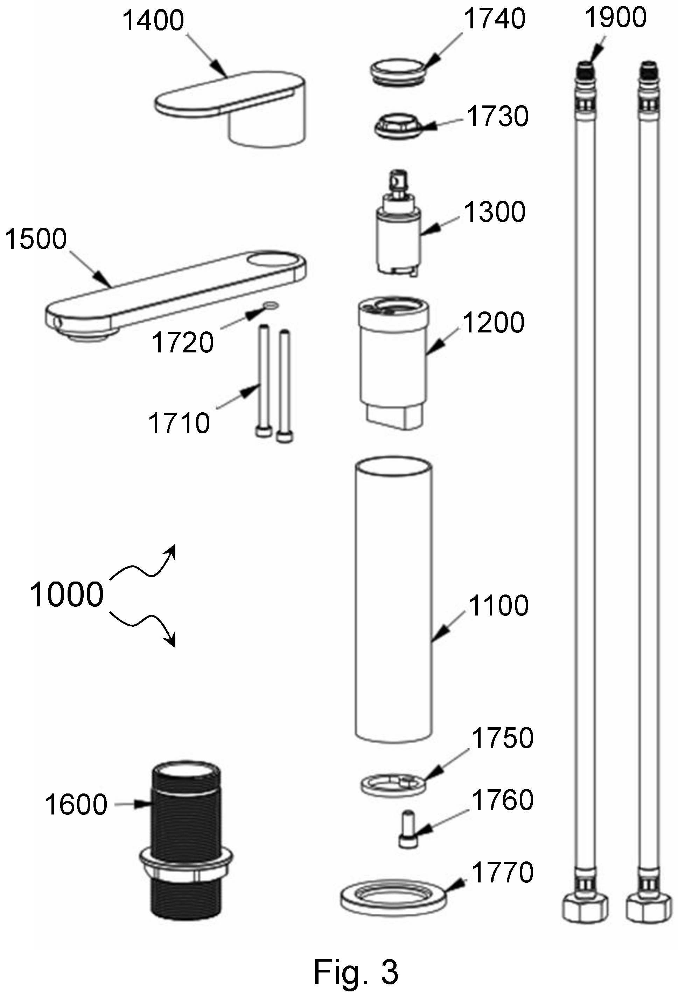

According to the embodiment shown in figures 3-7 (and similarly in Fig. 8 and Fig. 9), the water passage chamber 1220 preferably has an elongated shape and, more preferably, an elongated and straight shape, and is located on the side of the cartridge 1300 (the term "lateral protrusion" of the seat was used previously) and/or preferably has a cross-section in the shape of a so-called "crescent moon" (but it could also have a different shape); the maximum depth of the passage chamber falls within a range that preferably ranges from 1 mm to 10 mm, but, more preferably, from 2 mm to 5 mm.

In the case described above, where the passage chamber is located on the side of the cartridge, the maximum length of the chamber is equal to the length L (see, for example, Fig. 8 and Fig. 9) of the cartridge in the axial direction; if the hydraulic seal between the cartridge and the cartridge housing is located at the side surface of the cartridge at one of its ends (as in Fig. 4, Fig. 8, and Fig. 9), the maximum length of the chamber is slightly less than the length of the cartridge. Depending on the configuration of the conduit, it cannot be ruled out that the length of the chamber may be less, for example, from 1/3 to 2/3 (in particular 1/2) of the length of the cartridge. Depending on the configuration of the conduit, the chamber may be positioned in various ways in the axial direction; for example, it may be located only in a lower zone, or only in an upper zone, or only in a central zone. Based on tests conducted by the Applicant, the ideal is for the chamber length to be equal to or slightly (e.g., by 10%) less than the cartridge length (as shown in Fig. 4, Fig. 8, and Fig. 9).

According to a first possible alternative, the passage chamber could comprise a portion that is disc-shaped and located below the cartridge; however, this portion could be in addition to the elongated and straight portion.

According to a second possible alternative, the passage chamber could comprise a portion that is ring-shaped and located around the cartridge; however, this portion could be in addition to the elongated and straight portion.

In essence, the water flow path must be designed so that water exits the cartridge outlet, passes first through the passage chamber and then through the conduit of the housing, and finally enters directly into the conduit of the spout. This water flow path is entirely defined by the cartridge housing. The design of this path should preferably be such that the cartridge housing is not much larger than the cartridge itself; more precisely, the cartridge housing should have a diameter not much larger than the diameter of the cartridge itself.

Advantageously, the spout 1500 is secured to the cartridge housing 1200. More advantageously, the spout 1500 is secured to the cartridge housing 1200 by means of two screws 1710 having heads located at the lower portion of the cartridge housing 1200 and free ends inserted into holes 1520 formed in the spout 1500, said holes 1520 preferably being blind.

Fig. 3 shows additional components, in addition to those mentioned above, that are advantageous but not strictly necessary for the purposes of the present invention:
- a mounting shaft 1600,
- a sealing gasket 1720,
- a cartridge retaining ring 1730,
- a decorative cover 1740,
- a mounting ring 1750,
- a mounting screw 1760,
- a base ring 1770, and
- two (flexible) water hoses 1900 (not strictly part of the tap 1000).

The shaft 1600 is used to secure the column 1100, for example, to a sink.

The ring 1770 serves as the base for the column 1100.

The ring 1750 and the screw 1760 are located inside the column 1100 and are used to secure it to the shaft 1200.

The gasket 1720 provides a watertight seal between the housing 1200 and the spout 1500 and prevents water leakage beneath the spout.

Advantageously a ring is attached to one end of the spout 1500 forming an opening-specifically, a large circular opening (see, for example, Fig. 7); more specifically, the spout and the ring are formed as a single piece. The control mechanism of the cartridge 1300 passes through this opening to allow for the installation of the handle 1400.

Additionally, a cartridge retaining ring 1730 and a decorative cover 1740 for the cartridge 1300 are provided.

From the description above, it is clear how easy it is to modify a product.

In fact, the column (e.g., 1100 in Fig. 1 and Fig. 3), the handle (e.g., 1400 in Fig. 1 and Fig. 3), and the spout (e.g., 1500 in Fig. 1 and Fig. 3)-which determine the tap's aesthetic appearance-can be designed with any dimensions and configurations as long as they comply with a few internal mechanical constraints.

Specifically, there are two pipes 1900: a first one to supply cold water to the cartridge 1300 and a second one to supply cold water to the cartridge 1300; the cartridge 1300 is adapted to control the outgoing water flow and mix hot and cold water.

Specifically:
- the column is capable of housing and, preferably, securing the cartridge housing,
- the spout is capable of attaching to the cartridge housing, and
- the handle is capable of interacting with the cartridge.

Fig. 8 and Fig. 9 will now be described to illustrate some possible alternatives 8200 and 9200 to the cartridge housing 1200 shown in Fig. 4. These alternatives can be used, for example, in the taps 1000 shown in Fig. 1 and 2000 shown in Fig. 2; note that the cartridge in Fig. 8 and Fig. 9 is designated with the same reference number 1300 as in Fig. 4 because, in these examples, it is the same cartridge with the same hydraulic seal (specifically an O-ring).

In Fig. 8, the conduit 8210 is inclined relative to the axis of the housing 8200 by an angle of approximately 25°. The passage chamber 8220 is, for example (but not necessarily), identical to the passage chamber 1220 in Fig. 4, in particular having the same shape and the same depth. Note that the conduit 8210 opens into the upper region of the passage chamber 8220.

In Fig. 9, the conduit 9210 is inclined relative to the axis of the housing 9200 by an angle of approximately 0°, i.e., it is parallel. The passage chamber 9220 is, for example (but not necessarily), identical to the passage chamber 1220 of Fig. 4, in particular having the same shape and the same depth. Note that between the passage chamber 9220 and the conduit 9210 there is a communication opening 9240 in the lower region of the passage chamber 9220; this may be formed, for example, by drilling.

The following are advantages of separating the functional body from the spout:
1. the possibility to combine different shapes, colors, and materials for the spouts (with the same planar connection) within the same functional group, thereby reducing the immobilization of the warehouse value of the final solutions;
2. the possibility to combine different spout sizes (with the same planar connection) thereby being able to manage with the same functional part also further functional product variants (for example different water point length) depending on market demand and without immobilizing products in stock with the different variants;
3. simplify the treatment of the spout for aesthetic finishing, for example in electroplating or PVD processes the presence of areas with bulky orthogonal elements (resulting from the union of the body with the spout) penalizes the realization;
4. the possibility to more easily isolate internal areas and channels that will come into contact with drinking water in order to prevent the potential release of hazardous substances (since the functional body can be separated from the spout and does not need to be treated with a cosmetic finish-as it will be concealed by the corresponding cosmetic cover- it is possible to avoid treating it with the electroplating process for chrome plating, thereby eliminating the issue of preventing nickel from depositing on surfaces in contact with drinking water during the chrome plating cycle) (since the spout is separable from the body, it is easier to cap to prevent, for example, nickel from entering areas in contact with water during the chrome plating cycle);
5. the possibility to manage small production batches for each type of spout variant and increase only the volumes of the cartridge housing, thereby reducing the immobilization of the warehouse value while maintaining a wide product range, as well as reducing the value of any missed sales of the spout variant (only the cost of the spout component is immobilized and not of the tap body attached to the spout).

The following are advantages of separating the functional body from the column:
1. the possibility to use any material for the column, as there is no requirement for it to be suitable for contact with drinking water, as is normally the case for aesthetic/functional bodies;
2. greater flexibility in the choice of materials for the column, as they do not need to be workable materials for the water passages (for example, ceramic body);
3. combining different shapes, colors, and materials to the same functional body in order to reduce warehouse immobilization while being able to offer multiple variants;
4. in the case of potability testing (e.g., KTW-BWGL required for DVGW product certifications), the number of parts to be tested is reduced, as these tests are carried out only on the elements in contact with drinking water of different materials therefore the variants of interest become only those obtained from the assembly of the functional body with the variants of spout materials and not from the more numerous variants of finished article different for example for the column materials;
5. the related costs are also optimized with regards to the production cycle since, in addition to being able to produce greater quantities of the functional body and minimize those for the aesthetic part in its variants, the use of a functional body concentrates the most complex processes within itself and makes the processing of the cover more economical, which in some cases can be made starting from a simple tube and not from a more traditional bar which is decidedly more expensive.

Finally, in general, the tap according to the present invention offers very simple maintenance and incorporates a construction solution that optimizes production and operational costs.

## Claims

1. A tap (1000) for the controlled dispensing of water, comprising:
- a hollow column (1100) that is positioned vertically when in use, having a first end and a second end,
- a cartridge housing (1200) inserted into said hollow column (1100) at said first end,
- a cartridge (1300) of cylindrical or conical or prismatic or truncated pyramidal shape, adapted to receive at least one inlet flow of water from below and to supply an outlet flow of water from below or laterally, and adapted to perform a flow control action and, if necessary, a flow mixing action, said cartridge (1300) being inserted into said cartridge housing (1200),
- a spout (1500) located above said column (1100) and positioned horizontally when in use, with a closed conduit (1510) extending from a first end zone to a second end zone, and adapted to receive water from said cartridge (1300) and dispense it to a user, and
- a control handle (1400) located above said column (1100) and above said spout (1500), and coupled to said cartridge (1300) to control the operation of said cartridge (1300);
**characterized in that** said cartridge housing (1200) internally defines a conduit (1210) coupled at its inlet to the outlet of said cartridge (1300) and which opens directly into said conduit (1510) of said spout (1500) at said first end zone from below;
wherein the coupling between the conduit (1210) of said cartridge housing (1200) and the outlet of said cartridge (1300) is achieved directly by means of a passage chamber (1220);
wherein said cartridge housing (1200) has an axis, and wherein said conduit (1210) of said cartridge housing (1200) is inclined relative to said axis by an angle between 0° and 30°.

2. Tap (1000) according to claim 1, wherein said conduit (1210) of said cartridge housing (1200) is inclined relative to said axis by an angle between 1° and 5°.

3. Tap (1000) according to claim 1, wherein said conduit (1210) of said cartridge housing (1200) is inclined relative to said axis by an angle between 5° and 15°.

4. Tap (1000) according to claim 1, wherein said conduit (1210) of said cartridge housing (1200) is inclined relative to said axis by an angle between 15° and 30°.

5. Tap according to claim 1, wherein said cartridge housing has an axis, and wherein said conduit of said cartridge housing is parallel to said axis.

6. Tap (1000) according to any one of claims 1 through 5, wherein said cartridge housing (1200) is formed from a single piece of metal and is produced by machining.

7. Tap according to claim 6, wherein said conduit (1210) is formed by drilling and wherein said passage chamber (1220) is formed by milling.

8. Tap (1000) according to any one of claims 1 through 5, wherein said cartridge housing (1200) is formed from a single piece of polymeric material and is obtained by molding.

9. Tap (1000) according to any one of the preceding claims, wherein said passage chamber (1220) is located on the side of said cartridge (1300) and has a preferably elongated shape and more preferably an elongated and straight shape.

10. Tap (1000) according to claim 9, wherein said passage chamber (1220) has a cross-section in the shape of a "crescent-moon".

11. Tap (1000) according to claim 9 or 10, wherein said passage chamber (1220) has a maximum depth within a range of 1 mm to 10 mm, preferably 2 mm to 5 mm.

12. Tap according to claim 9 or 10 or 11, wherein said passage chamber comprises a portion that is disc-shaped and located below said cartridge.

13. Tap according to claim 9 or 10 or 11 or 12, wherein said passage chamber comprises a portion that is ring-shaped and located around said cartridge.

14. Tap (1000) according to any one of the preceding claims, wherein said spout (1500) is secured to said cartridge housing (1200).

15. Tap (1000) according to claim 14, wherein said spout (1500) is secured to said cartridge housing (1200) by screws (1710) having heads located at the lower portion of said cartridge housing (1200) and free ends inserted into holes formed in said spout (1500), said holes preferably being blind.
